# EUROPEAN PATENT APPLICATION

(11) **EP 3 780 551 A1**
(43) Date of publication of application: **17.02.2021**
(21) Application number: 19192161.8
(22) Date of filing: 16.08.2019
(51) Int. Cl.: H04L 29/08

(54) **METHOD AND SYSTEM FOR MANAGING ASSETS IN A CLOUD COMPUTING ENVIRONMENT**

(71) Applicant: Siemens Aktiengesellschaft, 80333 München (DE)
(72) Inventor: SINGH, Ankit, 91058 Erlangen (DE); SHENOY, Gireesha, 560103 Bangalore (IN); DENLEY, Merton, Lakeville, MN Minnesota 55044 (US)
(74) Representative: Isarpatent

(57) **Abstract**

The present invention relates a method and system for managing assets in a cloud computing environment. In an embodiment, the method comprises detecting an event associated with the one or more assets (110A-N) deployed in a technical installation (106). Further, the method comprises obtaining state information associated with the one or more assets (110A-N) based on the unique identifier associated with the one or more assets (110A-N). The state information comprises information associated with a soft operating state and a hard operating state of the one or more assets (110A-N. Furthermore, the method comprises processing the state information associated with the one or more assets (110A-N) based on the detected event. Additionally, the method comprises managing the one or more assets (110A-N) in the technical installation (106) based on the processed state information associated with the one or more assets (110A-N).

## Description

The present invention generally relates to the field of cloud computing systems, and more particularly relates to a method and system for managing assets in a cloud computing environment.

With advent of cloud computing technology, a large number of devices are connected to a cloud computing system via Internet. The devices may be remotely located from a cloud computing system. The devices can be equipment, sensors, actuators, robots, and machinery in an industrial set-up; design, arrangement, or deployment for a particular purpose. The devices can be medical devices and equipment in a healthcare facility. The devices can be home appliances or office appliances in a residential or commercial establishment.

The cloud computing system may enable remote configuring, monitoring, controlling, and maintaining connected devices. Also, the cloud computing system may facilitate storing large amounts of data periodically gathered from the devices, analyzing the large amounts of data, and providing insights e.g., key Performance indicators, outliers) and alerts to operators, field engineers or owners of the devices via graphical user interface (e.g., of web applications). The insights and alerts may enable to control and maintain the devices, leading to efficient and fail-safe operation of the devices. The cloud computing system may also enable modifying parameters associated with the devices and issues control commands via the graphical user interface based on the insights and alerts. Typically, tracking and managing these devices is a tedious job. Each device or an asset contains specific configurations like subcomponents, part version and revisions, firmware releases, current state, contextual data, asset logs, IoT time series data, environmental data, and the like. These asset profiles need to be mapped across multiple assets, and their configurations and state, over time as deployed in a technical installation when combined into a production line or in the field when deployed. This asset profile and configuration information (hereinafter, state) is typically distributed across multiple locations including cloud, local and manually managed sources. This makes the asset management cumbersome and challenging. For example, up-to-date asset configuration data is always not fully available at one location, leading to asset data and relationship inconsistencies. Also, since the asset data is distributed across different databases, asset data management becomes a challenge. Conventionally, systems that support Bill of Material (BOM) capabilities may be used to perform asset management. However, there could be problems related to data redundancy, asset state management, and asset data consistency in such systems. This may lead to inefficient asset management in the industry.

In light of above, there is a need for a method and system for efficiently and reliably holistically manage assets with their respective state in the cloud computing environment.

Therefore, it is an object of the present invention to provide a method and system for managing assets in a cloud computing environment.

The object of the present invention is achieved by a method for managing assets in a cloud computing environment. The method comprises detecting an event associated with the one or more assets deployed in a technical installation. The event comprises a request received from one or more tenant devices or from one or more assets deployed in the technical installation, or a change in an asset's state. Further, the event comprises of any relevant change to an asset or the relationship across one or more related assets. Relevant changes include but not limited to physical deployment, subcomponent alternatives (e.g., new parts, firmware), production line changes, product manufacturing and/or environmental changes. Additionally, relevant changes may be defined users of the tenant devices. Representations of these events in states may be identified metadata and/or artifacts. Furthermore, the event may be a defined configuration and relationship of one or more devices including virtual, logical and/or physical permanent or temporary defined entity which may include vertical and horizontal relationships including, but not limited to, peer, tier, star, hierarchical, semantical, by-association, cross-system, and the like.

The method further comprises obtaining state information associated with one or more assets in a technical installation based on the unique identifier associated with the one or more assets. In an embodiment, the state information may also be obtained based on descriptive terms of assets. The state information comprises a soft operating state and a hard operating state associated with the assets. The soft operating state is more logical, virtual and in-memory and maybe change physically, but also programmatically or rules-based reacting to events e.g., self-adjusting configurations or optimizations. The hard operating state is more permanent in nature, may include physical state, artifact changes that may require manual/human intervention to implement, deploy, configure, etc. e.g., change state. In an embodiment, the soft operating state of the one or more assets may be rolled back to a previous state based on performance of the one or more assets and the hard-operating state cannot be rolled back to a previous state.

Furthermore, the method comprises processing the state information associated with the one or more assets based on the detected event. The method comprises managing the one or more assets in the technical installation based on the processed state information associated with the one or more assets.

In a preferred embodiment, the method may comprise receiving real-time information associated with the one or more assets in the technical installation from one or more sensors. The method may comprise detecting the event associated with the one or more assets based on the received real-time information associated with the one or more assets.

In an embodiment, the real-time information may trigger events like configuration adjustments to adapt to updated condition (like environmental humidity) to "self-optimize" based on the received real-time information.

In another preferred embodiment, the method may comprise establishing a secure connection with the one or more assets in the technical installation via a communication network. The method may comprise receiving the state information associated with the one or more assets in the technical installation. Furthermore, the method may comprise storing the state information associated with the one or more assets in the technical installation in a specific format in a database to uniquely identify state, event(s), and artifact(s).

In obtaining the state information associated with one or more assets in the technical installation, the method may comprise identifying a unique identifier associated with the one or more assets. Further, the method may comprise retrieving the state information associated with the one or more assets from the database based on the identified unique identifier.

In yet another preferred embodiment, in processing the state information associated with the one or more assets based on the detected event, the method may comprise identifying one or more assets deployed in the technical installation based on the real-time information associated with the one or more assets. The real-time information associated with the one or more assets comprises list of assets deployed in the technical installation, configuration information, parameter values, and corresponding assets specification and any other information related to the one or more assets. Further, the method may comprise generating one or more asset groups comprising identified one or more assets deployed in the technical installation. The one or more assets are grouped based on a task assigned to the one or more assets. In an embodiment, the task assigned to the one or more assets comprises a type of function performed synchronously. In an exemplary embodiment, the type of function performed may include producing a particular part of a product (such as an asset). Furthermore, the method comprises storing the generated one or more groups of assets in the database.

In still another preferred embodiment, in processing the state information associated with the one or more assets based on the detected event, the method may comprise analyzing the received state information associated with the one or more assets in the technical installation. The method may comprise determining an asset group to which the asset belongs based on the pre-stored asset groups. Furthermore, the method comprises generating state information associated with the determined asset group based on the analyzed state information associated with the one or more assets and based on one or more performance parameters. The one or more performance parameters comprises power consumption, gain, efficiency , speed associated with an asset and any other known parameters influencing the performance of the assets. Moreover, the method may comprise storing the state information associated with the asset group in the database.

In still another preferred embodiment, in processing the state information associated with the one or more assets based on the detected event, the method may comprise determining one or more modifications made in the state information based on pre-stored state information. The one or more modifications may comprise change of the current state of the asset to a new state, addition or deletion of one or more asset parameters, revision to a software update, version update to the asset and the like. Further, the method may comprise updating the state information associated with the one or more assets in real-time based on the determined one or more modifications. Furthermore, the method may comprise storing the updated state information associated with the one or more assets in the database.

In yet another preferred embodiment, in processing the state information associated with the one or more assets based on the detected event, the method may comprise determining performance of the one or more assets in real-time based on the current state information of the one or more assets. Further, the method may comprise determining performance of the asset group in real-time based on the determined performance of the one or more assets and the current state information of the asset group. Additionally, the method may comprise modifying the current state information of the one or more assets if the performance of the asset group and the one or more assets belonging to the asset group is abnormal.

In an aspect of the preferred embodiment, in managing the one or more assets in the technical installation based on the processed state information associated with the one or more assets, the method may comprise deploying the modified state information into the one or more assets in the technical installation.

In another preferred embodiment, in managing the one or more assets in the technical installation based on the processed state information associated with the one or more assets, the method may comprise generating a virtual asset model for the one or more assets in the technical installation based on the processed state information associated with the one or more assets. The virtual asset model comprises virtual assets emulating the behavior of real-time assets in the technical installation. Further, the method may comprise performing one or more actions on the virtual asset model based on the processed state information. The one or more actions may comprises executing predefined tests on the virtual assets, simulation of the assets, generating simulation models of the assets, validation of the simulation models, generating behavior models of the assets and the like. The method may comprise analyzing the behavior of the virtual assets upon performing the one or more actions. Moreover, the method may comprise deploying the processed state information into the real-time one or more assets based on the analysis.

In an embodiment, simulation models are commonly referred to as "Digital Twins" of the physical assets and the representation of virtual assets. The simulation models may comprise computer aided engineering (CAE) drawings, one dimensional or three dimensional models for Computational Flow Dynamics (CFD), noise, vibration, and harshness (NVH), structures, and the like. The one or more actions may comprises executing predefined tests on the virtual assets, simulation of the assets, generating simulation models of the assets, validation of the simulation models, generating behavior models of the assets and the like.

The method may comprise analyzing the behavior of the virtual assets upon performing the one or more actions. Moreover, the method may comprise deploying the processed state information into the real-time one or more assets based on the analysis.

The object of the present invention is also be achieved by a cloud computing system for managing assets. The cloud computing system may comprise one or more processors and a memory coupled to the one or more processors. The memory comprises an asset management module stored in the form of machine-readable instructions and executable by the one or more processors.

The asset management module is configured for performing the method described above.

The object of the invention can also be achieved by a cloud computing environment for managing assets. The cloud computing environment comprising a system, a plurality of tenant devices communicatively coupled to the system and a technical installation via a network, and the technical installation comprising one or more asset groups. The one or more asset groups comprises one or more assets communicatively coupled to the system and the tenant devices.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment capable of managing assets, according to an embodiment of the present invention;
- FIG 2: is a block diagram of an asset data processing module capable of processing asset data associated with the one or more assets, according to the embodiment of the present invention;
- FIG 3: is a block diagram of an asset control module capable of managing the one or more assets in the technical installation, according to the embodiment of the present invention;
- FIG 4: is a process flowchart illustrating an exemplary method of managing assets in the cloud computing environment, according to the embodiment of the present invention;
- FIG 5: is a process flowchart illustrating an exemplary method of managing assets in the cloud computing environment, according to another embodiment of the present invention;
- FIG 6: is a process flowchart illustrating an exemplary method of managing assets in the cloud computing environment, according to yet another embodiment of the present invention;
- FIG 7: is a block diagram of cloud hardware and resources, such as those in shown in FIG 1, showing various components to implement embodiments of the present invention;
- FIG 8: is a flow diagram illustrating an exemplary method of managing assets in the cloud computing environment, according to an embodiment of the present invention; and
- FIG. 9: is a flow diagram illustrating an exemplary method of managing assets in the cloud computing environment, according to another embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

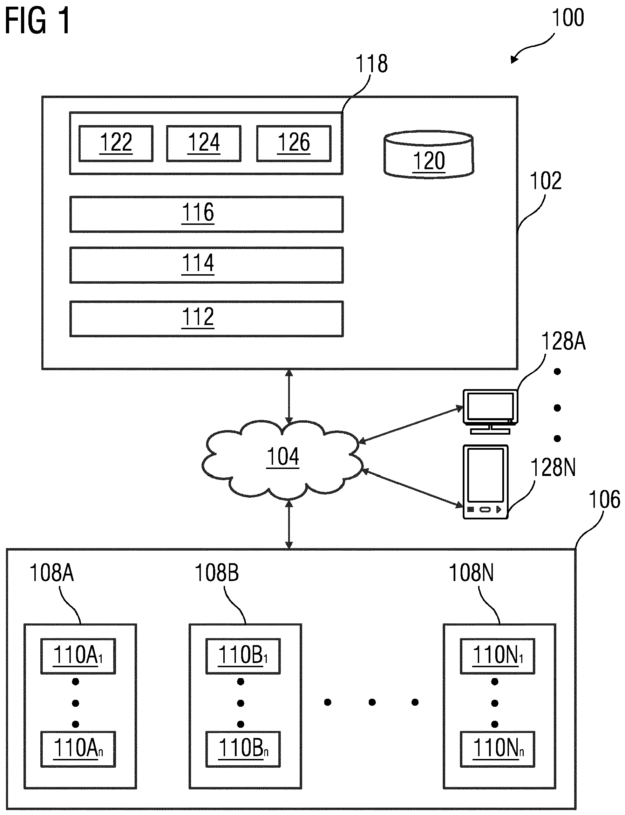

FIG 1 is a schematic representation of a cloud computing environment 100 capable of managing assets, according to an embodiment of the present invention. Particularly, FIG 1 depicts the cloud computing system 102 which is capable of delivering cloud applications for managing a technical installation 106 comprising asset groups 108A-N. Each asset group 108A-N comprises one or more assets 110A-N. The cloud computing system 102 is connected to the asset groups 108A-N in the technical installation 106 via a network 104 (e.g., Internet). The one or more assets 110A-N may include servers, robots, switches, automation devices, motors, valves, pumps, actuators, sensors and other industrial equipment. The one or more assets 110A-N may be internet of things (IoT) enabled. Although, FIG 1 illustrates the cloud computing system 102 connected to one technical installation 106, one skilled in the art can envision that the cloud computing system 102 can be connected to several technical installations located at different locations via the network 104.

Further, the cloud computing system 102 is also connected to tenant device(s) 128A-N via the network 104. The term "tenant devices" may alternatively be referred as "user devices" or "client devices" throughout the specification. The tenant devices 128A-N can access the cloud computing system 102 for managing assets using state information of the assets. The tenant devices 128A-N can be a laptop computer, desktop computer, tablet computer, smartphone and the like. The tenant devices 128A-N can access cloud applications (such as providing performance visualization of the assets 110A-N) via a web browser.

In order to access the cloud applications, one or more artifacts are required to be deployed on the cloud platform 114, which are then accessed by personnel and assets 110A-N in the technical installation 106 to avail the cloud applications. Therefore, the cloud computing system 102 is provided which is capable of managing assets. Exemplary artifacts may include applications (application for monitoring state of an asset), state information simulation models, engineering configuration, digital twin models, code snippets, APIs, security applications, firmware and so on.

The artifact may include applications (application for monitoring state information of a robot), asset state information, simulation models, engineering design configuration (e.g., As Designed, As Built, As Tested, As Manufactured, As Deployed, As Maintained, As Operated, etc.), digital twin models (e.g., Product, Operations, Production, Performance), code snippets, application programming interfaces (APIs), security applications, relationships to other devices, firmware and so on. The tenant may access the artifacts to avail cloud applications.

The cloud computing system 102 comprises a cloud interface 112, cloud hardware and OS 114, cloud platform 116, an asset management module 118 and a cloud database 120. The cloud interface 112 enables communication between the cloud platform 116 and the technical installation 106. Also, the cloud interface 112 enables communication between the cloud platform 116 and the tenant devices 128A-N.

The cloud hardware and OS 114 may include one or more servers on which an operating system (OS) is installed. The one or more servers comprises one or more processing units, one or more storage devices for storing data, and other peripherals required for providing cloud functionality. The cloud platform 116 is a platform which implements functionalities such as data storage, data analysis, data processing, data management, data validation, data visualization, data communication on the cloud hardware and OS 114 via APIs and algorithms and delivers the aforementioned cloud services using artifacts. The cloud platform 116 employs an asset management module 118 for managing the one or more assets 110A-N. The cloud platform 116 may comprise a combination of dedicated hardware and software built on top of the cloud hardware and OS 114.

The cloud computing system 102 may comprise a plurality of servers or processors (also known as 'cloud infrastructure'), which are geographical distributed, connected with each other via a network 104. A dedicated platform (hereinafter referred to as 'cloud platform') is installed on the servers/processors for providing above functionality as an application (hereinafter referred to as 'cloud application'). The cloud platform 116 may comprise a plurality of software programs executed on one or more servers or processors of the cloud computing system 102 to enable delivery of the requested applications to the devices and its users (hereinafter referred to as tenants).

One or more artifacts are deployed in the cloud computing system 102 to provide different applications to the tenants 128A-N. The artifacts may include applications, simulation models, engineering configuration, application programming interfaces (APIs), and so on. For example, an application for monitoring state information of robots in a manufacturing facility may be deployed as an artifact. The application may be capable of analyzing the data collected from the robots over a period. The tenant 128A-N may subscribe to cloud applications which analyzes data associated with robots using the application, and displays the outcome of analysis (e.g., outliers) to the tenant 128A-N via a web application on the tenant device 128A-N.

The cloud platform 116 may enable a plurality of developers to develop the one or more artifacts. Also, the cloud platform 116 may facilitate providers to deploy one or more artifacts developed by the developers in the cloud computing system 102 to deliver cloud applications to one or more tenants 128A-N of the cloud platform 116. The communication between the cloud platform 116 and the asset management module 118 may be over RESTful webservices over HTTPs. The data between the cloud platform 116 and the asset management module 118 are exchanged by a push-pull model. In a pull model, the asset management module 118 pulls relevant data points from the cloud platform 116 on a regular interval. The cloud platform 116 leverages REST endpoints to propagate the relevant data. In a push model, the cloud platform 116 push the relevant data to the asset management module 118 on a regular interval. For this, the cloud platform 116 invokes REST endpoints exposed by the asset management module 118 to propagate the data. In both push and pull model, the cloud platform 116 establishes a secure internet protocol (IP) connection (HTTPs)with the asset management module 118.

The asset management module 118 is stored in the form of machine-readable instructions and executable by the cloud platform 116. The asset management module 118 comprises an event handler 122, asset data processing module 124, and an asset control module 126.

The event handler 122 is configured to detect an event associated with the one or more assets 110A-N deployed in a technical installation 106. The event comprises a request received from one or more tenant devices or from one or more assets deployed in the technical installation, or a change in an asset's state. Further, the event comprises of any relevant change to an asset or the relationship across one or more related assets. Relevant changes include but not limited to physical deployment, subcomponent alternatives (e.g., new parts, firmware), production line changes, product manufacturing and/or environmental changes. Additionally, relevant changes may be defined users of the tenant devices. Representations of these events in states may be identified metadata and/or artifacts. Furthermore, the event may be a defined configuration and relationship of one or more devices including virtual, logical and/or physical permanent or temporary defined entity which may include vertical and horizontal relationships including, but not limited to, peer, tier, star, hierarchical, semantical, by-association, cross-system, and the like.

In an embodiment, the event handler 122 is configured to receive real-time information associated with the one or more assets 110A-N from the technical installation 106. Further, the event handler 122 is configured to detect the event associated with the one or more assets 110A-N based on the received real-time information associated with the one or more assets 110A-N. Furthermore, the event handler 122 is configured to establish a secure connection with the one or more assets 110A-N in the technical installation 106 via the communication network 104. Also, the event handler 122 is configured to receive the state information associated with the one or more assets 110A-N in the technical installation 106.

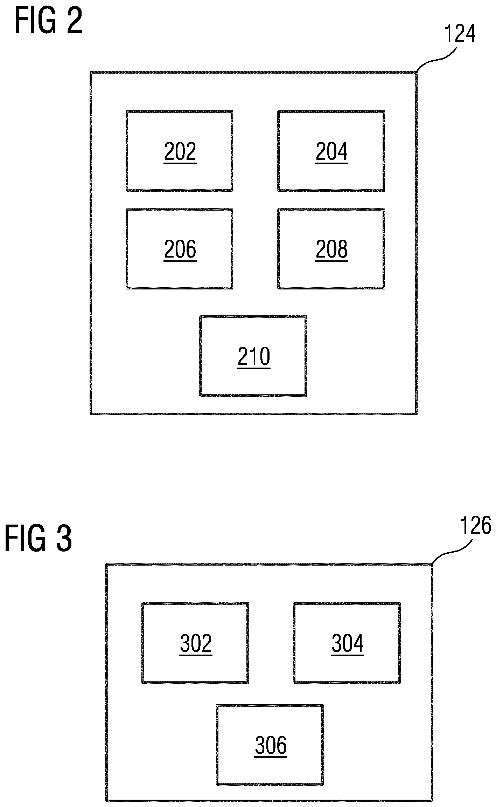

The data processing module 124 is configured for obtaining state information associated with the one or more assets 110A-N based on the unique identifier associated with the one or more assets 110A-N. The unique ID associated with the one or more assets 110A-N may be a unique sequence of numbers assigned specific to the one or more assets 110A-N. The unique ID associated with the one or more assets 110A-N may be generated using any mechanisms known in the art. The state information comprises information comprises information associated with a soft operating state and a hard operating state of the one or more assets 110A-N. The state information associated with the one or more assets 110A-N are obtained using suitable APIs. Further, the data processing module 124 is configured for processing the state information associated with the one or more assets based on the detected event. The details of processing the state information has been explained in FIG. 2.

The asset control module 126 is configured to manage the one or more assets 110A-N in the technical installation 106 based on the processed state information associated with the one or more assets 110A-N. Further, the asset control module 126 is configured to display state information associated with the one or more assets 110A-N on a user interface of the tenant devices 128A-N. The details of the asset control module 126 has been explained in FIG. 3.

The cloud database 120 is configured to store the state information associated with the one or more assets110A-N in the technical installation 106 in a specific format. In an embodiment, the cloud database 120 may comprise a relational database (RDBMS), file system and not only SQL (NoSQL) database. The cloud database 120 are encrypted to secure all data stored. High encryption ciphers are used with Secure Socket Layer (SSL) to secure the communication means. In an exemplary embodiment, the specific format may comprise data lake storage formator JavaScript Object Notation, (JSON) spider list format. The data lake format ".ay" be used for storing images or media files associated with the one or more assets 110A-N that is independent of IoT data sets received from the IoT cloud platform 116 or IoT enabled assets 110A-N. Also, in JSON spider list format, data is stored in the form of unstructured data which helps reducing dependencies on the relational database. Further, the cloud database 120 is configured to store the generated one or more asset groups 108A-N. Also, the cloud database 120 is configured to store the state information associated with the asset groups 108A-N. Furthermore, the cloud database 120 is configured to store the updated state information associated with the one or more assets 110A-N.

FIG 2 is a block diagram of an asset data processing module 124 capable of processing asset data associated with the one or more assets 110A-N, according to the embodiment of the present invention. In FIG. 2, the asset data processing module 124 comprises an industrial plant data handling module 202, an asset data mapper 204, an asset group management module 206, an asset state processing module 208 and an asset state rollback module 210.

The industrial plant data handling module 202 is configured to receive real-time asset information associated with the one or more assets 128A-N in the technical installation 106. The real-time asset information comprises state information, configuration information, and asset profile information associated with the one or more assets 128A-N. In an exemplary embodiment, the configuration information comprises version information of the assets 128A-N, version information of the corresponding virtual assets in the cloud computing system 102, asset tutorials, maintenance guide, warranty information, configuration instructions and the like. In an exemplary embodiment, the real-time asset information is uploaded by the users at the tenant devices 128A-N or directly by the one or more assets 110A-N via a WebSocket. The WebSocket connection is established before the upload. The cloud computing system 102 provides the WebSocket interface for asset information transfers as this has increased speed of data transfer.

The industrial plant data handling module 202 accepts the information retrieved from the cloud platform 116 and identifies the various IoT data sets associated with the one or more assets 110A-N. The data sets may include asset information, technical installation information, communication information, network information and the like.

The industrial plant data handling module 202 basically classifies or filters the received real time asset information based on the content. For example, the real-time asset information may be initially classified based on type of asset, function/task performed by the asset, stage of commissioning, tag information and the like. The classified asset information is then provided to the asset data mapper 204.

The asset data mapper 204 is configured to map the classified asset information into respective links in the cloud database 120 using a specific data structure. In specific, the asset data mapper 204 maps the classified asset information into respective asset information in the cloud database 120 in order to build a lookup table or a data lake. For example, the classified asset information comprises current state information of asset A, then the asset data mapper 204 maps this current state information into the state information of the asset A stored in the cloud database 120. The asset data mapper 204 logically maps the asset information in the database 120 via the specific data structure such that single entry of each received data is entered, hence reducing data redundancy.

The asset group management module 206 is configured to create and manage asset groups 108A-N for each technical installation 106. The asset group management module 206 is configured to identify one or more assets 110A-N deployed in the technical installation 106 based on the real-time asset information. The real-time asset information comprises list of assets 110A-N deployed in the technical installation 106 and corresponding assets specification. Further, the asset group management module 206 is configured to generate one or more asset groups 108A-N comprising identified one or more assets 110A-N deployed in the technical installation 106. The one or more assets 110A-N are grouped based on a task assigned to the one or more assets 110AN.

In an exemplary embodiment, consider if the assets 110A1-110AN are performing a similar task of assembling a part of a product like Aero plane or bottling beers in a factory line. The asset group management module 206 identifies such assets performing a similar task and groups them as say, asset group 108A. Similarly, all the assets 110A-N in the technical installation 106 grouped to form various asset groups 108A-N. In an embodiment, each asset group comprises one or more assets and each one or more assets mandatorily belongs to at least one asset group. Each asset group is associated with a unique identifier. Further, each asset group is associated with a group state information stored in the database 120.

Further, the asset group management module 206 is configured to handle the modifications made to each of the asset groups 108AN. For example, if any asset groups 108A-N are added or deleted, the asset group management module 206 correspondingly updates this information in the database 120. Also, when any of the asset groups 108A-N are added, the asset group management module 206 retrieves all information relevant to this new asset group, maps the information to this new asset group and stores in the database 120. Similarly, if any asset groups are deleted, the asset group management module 206 deletes the corresponding entry in the database 120. Furthermore, if any assets belonging to the asset groups 108A-N is replaced, or changed or is damaged, the asset group management module 206 decides whether to request a new asset into this asset group 108A-N or not.

The asset state processing module 208 is configured to identify a unique identifier associated with the one or more assets 110AN and retrieve the state information associated with the one or more assets 110A-N from the database 120 based on the identified unique identifier, in order to obtain the state information associated with one or more assets 110A-N in the technical installation 106. The state information is retrieved by traversing through the stack based Json spider data structure maintained in the database 120 without requiring to write complex structured query language (SQL).

Further, the asset state processing module 208 is configured to analyze the received state information associated with the one or more assets 110A-N in the technical installation 106. Also, the asset state processing module 208 is configured to determine an asset group 108A-N to which the asset 110A-N belongs based on the pre-stored asset groups. Further, the asset state processing module 208 is configured to generate state information associated with the determined asset group 108A-N based on the analyzed state information associated with the one or more assets 110A-N and based on one or more performance parameters. The performance parameters may comprise of different values of an asset like vibration, temperature, friction that may result in degradation of asset or assets performance and quality of service and may reduce the energy efficiency. The state information for the asset groups 108A-N are generated in a unique data structure such as JSON (Java script Object notation) spider lit over a stack in order to help the asset data mapper module 204 to link this state information of the asset groups in the database 120. Further, every state information of the asset groups 108A-N is generated in the form of state machines.

The asset state processing module 208 is configured to determine one or more modifications made in the state information based on a pre-stored state information. The one or more modifications may comprise change of state of an asset from an old state to a new state, or vice versa. The state of an asset may be a hard operating state or a soft operating state. A hard operating state may include hardware update, device configuration change, update to physical parts like for example condenser of a heat pump or the like. A soft operating state may include a software update, software version changes or the like. In any case, the soft operating state of the one or more assets 110A-N may be rolled back to a previous state (or a state determined to be stable) if the performance of the asset in new state is determined to be poor. However, hard operating state of the asset may not be rolled back at a given time. Further, the state information may comprise state indicators such as online, offline, error state or the like. Further, the asset state processing module 208 is configured to update the state information associated with the one or more assets 110A-N in real-time based on the determined one or more modifications. This ensures that the state information is automatically synchronized in the cloud computing system 102 as soon as there is a modification in the state information of the one or more assets 110A-N. This also enables integrity and traceability of asset activities.

The asset state processing module 208 tracks the state information associated with the one or more assets 110A-N in order to maintain up to date state information of the one or more assets 110A-N.

The asset state rollback module 210 is configured to roll back the state of the one or more assets 110A-N and the state of the corresponding asset group 108A-N to which the asset belongs to any of the previous states. In specific, the asset state rollback module 210 is configured to determine the performance of the one or more assets 110A-N in real-time based on the current state information of the one or more assets 110A-N. Further, the asset state rollback module 210 is configured to determine performance of the asset group 108A-N in real-time based on the determined performance of the one or more assets 110A-N and the current state information of the asset group 108A-N. Further, the asset state rollback module 210is configured to modify the current state information of the one or more assets 110A-N if the performance of the asset group 108A-N and the one or more assets 110A-N belonging to the asset group 108A-N is abnormal. Consider that asset 1, asset 2, asset 3 and asset 4 belong to an Asset group 1. If a state of Asset 1 has been changed from 1.0 to 1.1, the state of the asset group 1 also gets changed from 1.0 to 1.1. This may be due to a firmware update or any software update to asset 1 which resulted I change of state of asset 1. Now, it is determined whether the performance of the asset 1 is good or bad. This may be due to malfunctioning of updates performed on the asset 1 or degraded performance or unexpected system behavior due to the change of state. If suppose, the performance of the asset 1 is determined to be bad, next the performance of the asset group 1 is determined due to the poor performance of asset 1 and other performance parameters as mentioned above. If the performance of the asset group 1 also is determined to be bad, then the asset rollback module 210 detects which other state would be suitable for the asset group 1 and the asset 1 such that the performance of asset 1 and the asset group 1 is improved. The suitable state would be identified from a database 120 comprising history of asset states and asset group states. For example, if the previous state 1.0 of the asset 1 is determined to be more suitable, then the asset state rollback module 210 rollbacks (or modified) the current state 1.1 of the asset 1 to its previous state 1.0 which is more stable and improves its performance. Hence, due to this rollback, the state of the asset group is also rolled back to its previous state say 1.0 . This ensures that the performance of the one or more assets 110A-N and its corresponding asset groups 108A-N are maintained stable and are always improved.

FIG 3 is a block diagram of an asset control module 126 capable of managing the one or more assets 110A-N in the technical installation 106, according to the embodiment of the present invention. In FIG. 3, the asset control module 126 comprises a virtual asset model generation module 302, an asset state deployer module 304, and an asset visualization module 306.

The virtual asset model generation module 302 is configured to generate a virtual asset model for the one or more assets 110A-N in the technical installation 106 based on the processed state information associated with the one or more assets 110A-N. The virtual asset model comprises virtual assets emulating the behavior of real-time one or more assets 110A-N in the technical installation 106. In an exemplary embodiment, the virtual asset model may correspond to a digital twin asset model. The virtual asset model depicts both configuration and the behavior characteristics of physical asset(s), such as assets 128A-N. In an embodiment, the virtual assets have a defined relationship with the physical assets, such as assets 128A-N. The defined relationship is based on the state information, for example configuration information. In an exemplary embodiment, each state of the virtual asset is related to corresponding state of the physical asset, 128A-N.In a further embodiment, the relationships are defined using one or more industrial automation application systems, such as Product Lifecycle Management Systems, CAD systems, and the like. In an embodiment, simulation models are commonly referred to as "Digital Twins" of the physical assets and the representation of virtual assets. The simulation models may comprise computer aided engineering (CAE) drawings, one dimensional or three dimensional models for Computational Flow Dynamics (CFD), noise, vibration, and harshness (NVH), structures, and the like. The one or more actions may comprises executing predefined tests on the virtual assets, simulation of the assets, generating simulation models of the assets, validation of the simulation models, generating behavior models of the assets and the like.

The method further comprises analyzing the behavior of the virtual assets upon performing the one or more actions. In an embodiment, while analyzing the behavior of the virtual assets, relationships between the physical assets, such as assets 128A-N and the virtual assets are determined based on the state information (for example version information). Relationships between the virtual assets and the physical assets, such as assets 128A-N may comprises soft operating state relationship or a hard-operating state relationship. Moreover, the method comprises deploying the processed state information into the real-time one or more assets based on the analysis. Further, the results from the simulation model execution and analysis may include asset configuration settings, firmware changes, and other recommended changes to affect asset operations and/or performance.

Further, the virtual asset model generation module 302 is configured to perform one or more actions on the virtual asset model based on the processed state information. The one or more actions may comprise predefined sequence of tests to compare the behavior of asset or group of assets from previous revisions using the virtual asset model. For example, the one or more actions are performed to simulate the virtual assets in a virtual environment.

Furthermore, the virtual asset model generation module 302 is configured to analyze the behavior of the virtual assets upon performing the one or more actions. The behavior of the virtual assets is analyzed based on modified state of the assets 110A-N. For example, if the state of the asset 1 is changed to a new state, then this change of state is being loaded to the virtual asset 1 emulating the asset 1 in technical installation 106. The behavior of this virtual asset 1 for the changed state is being analyzed to determine the impact of the changed state of the asset 1. The results of the analysis are then provided to the asset state deployer module 304.

The asset state deployer module 304 is configured to deploy the processed state information into the one or more assets 110A-N in the technical installation 106. The processed state information may be a modified state information. In an embodiment, when the state of the asset 110A-N belonging to the asset group 108A-N is rolled back (or modified) to a previous state, then the impact of the rolled back state over the behavior of the asset is determined and then the rolled back state is deployed to the physical asset 110A-N in the technical installation 106 if the behavior of the asset is verified to be normal. If in case the behavior of asset is determined to be abnormal due to the change of state of the asset, then the rolled back state of the asset is not deployed on to the physical asset 110A-N. In this case, the loop goes back to determine a roll back state which is feasible for the correct behavior of the asset 110A-N.

The asset visualization module 306 is configured to remotely generate visualizations of the virtual asset model, behavior models of the one or more assets 110A-N, and the like. The asset visualization module 306 comprises RESTful endpoints transforming JSON objects to digital asset to replicate the physical asset visualization.

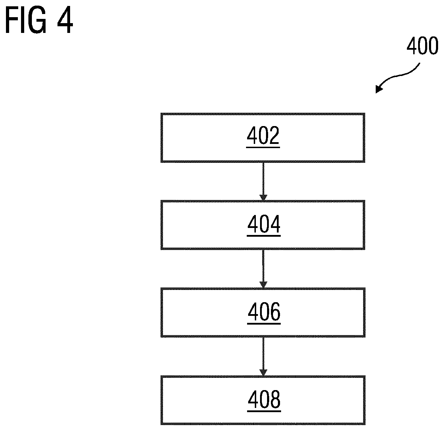

FIG. 4 is a process flowchart illustrating an exemplary method 400 of managing assets 110A-N in the cloud computing environment 100, according to the embodiment of the present invention. At step 402, an event associated with the one or more assets 110A-N deployed in the technical installation 106 is detected. At step 404, state information associated with the one or more assets 110A-N is obtained based on the unique identifier associated with the one or more assets 110A-N. The state information comprises information associated with a soft operating state and a hard operating state of the one or more assets 110A-N. At step 406, the state information associated with the one or more assets 110A-N is processed based on the detected event. At step 408, the one or more assets 110A-N in the technical installation 106 is managed based on the processed state information associated with the one or more assets 110A-N.

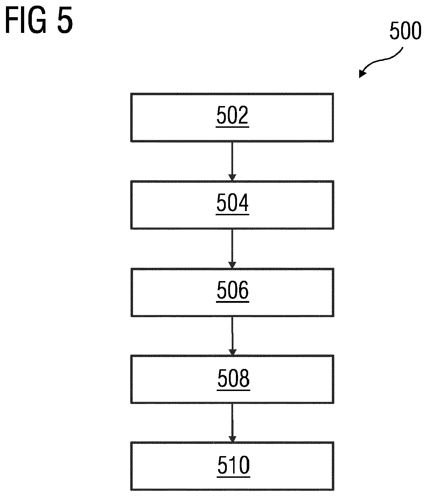

FIG. 5 is a process flowchart illustrating an exemplary method 500 of managing assets 110A-N in the cloud computing environment 100, according to another embodiment of the present invention. At step 502, a secure connection is established with the one or more assets 110A-N in the technical installation 106 via the communication network 104. At step 504, the state information associated with the one or more assets 110A-N in the technical installation 106 is received. At step 506, the one or more assets 110A-N deployed in the technical installation 106 is identified based on a real-time information associated with the one or more assets 110A-N. The real-time information associated with the one or more assets 110A-N comprises list of assets 110A-N deployed in the technical installation 106 and corresponding assets specification. At step 508, one or more asset groups 108A-N comprising identified one or more assets 110A-N deployed in the technical installation 106 is generated. The one or more assets 110A-N are grouped based on a task assigned to the one or more assets 110A-N. At step 510, the generated one or more asset groups 108A-N are stored in the cloud database 120.

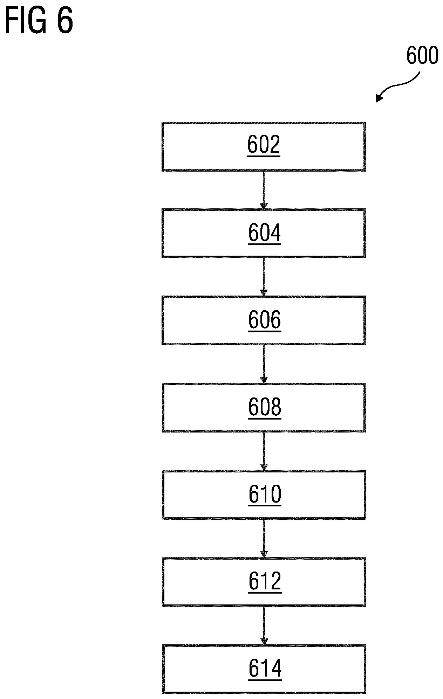

FIG 6 is a process flowchart illustrating an exemplary method 600 of managing assets 110A-N in the cloud computing environment 100, according to yet another embodiment of the present invention. At step 602, performance of the one or more assets 110A-N in real-time is determined based on the current state information of the one or more assets 110A-N. At step 604, performance of the asset group 108A-N in real-time is determined based on the determined performance of the one or more assets 110A-N and the current state information of the asset group 108A-N. At step 606, the current state information of the one or more assets 110A-N is modified if the performance of the asset group 108A-N and the one or more assets 110A-N belonging to the asset group 108A-N is abnormal. For example, the state of an asset 110A may be modified to its previous state.

At step 608, a virtual asset model for the one or more assets 110A-N in the technical installation 106 is generated based on the modified state information associated with the one or more assets 110A-N. This is to determine the impact of the modified state information on the one or more assets 110A-N and the asset groups 108A-N. The virtual asset model comprises virtual assets emulating the behavior of real-time one or more assets 110A-N in the technical installation 106. At step 610, one or more actions are performed on the virtual asset model based on the modified state information. The one or more actions comprises executing tests to refine, optimize and validate the virtual asset models . For example, state information instance may be created for the one or more virtual assets and a series of actions may be performed to check the behavior of the virtual asset when the state of the assets 110A-N is being changed.

For example, the state of the assets 110A-N may be changed due to the physical asset conditions such as environmental elements, time and the like. In such scenarios, along with the behavior of the virtual assets, other parameters such as usage, wear and tear values are determined and based on these parameters, the lifecycle of the assets 110A-N are also determined.

At step 612, the behavior of the virtual assets is analyzed upon performing the one or more actions. The behavior of the virtual assets may be normal, or abnormal. At step 614, the modified state information is deployed into the real-time one or more assets 110A-N based on the analysis. For example, if the results if the analysis indicate normal behavior of the virtual assets, then the modified state of the asset is deployed into the real one or more assets 110A-N.

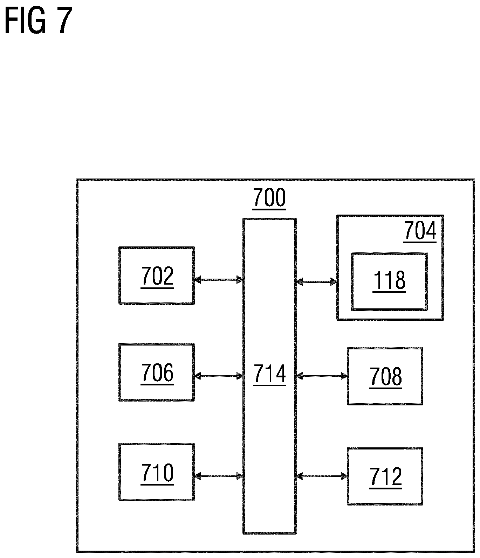

FIG 7 is a block diagram of cloud hardware and resources 700, such as those in shown in FIG 1, showing various components to implement embodiments of the present invention. In an embodiment, the cloud computing system 700 may be similar to the cloud computing system 102 as shown in FIG 1. The cloud computing system 700 includes a processor(s) 702, a memory 704, a storage unit 706, an input-output unit 708, a communication interface 710, a display unit 712, and a bus 714.

The processor(s) 702, as used herein, may be one or more processing units (e.g., servers) capable of processing requests from the tenant device (s) 110A-N, and also from the technical installation 106. The processor(s) 702 may also include embedded controllers, such as generic or programmable logic devices or arrays, application specific integrated circuits, or FPGAs (Field Programmable Gate Arrays) and the like. The memory 704 may be volatile memory and non-volatile memory. The memory 704 includes an asset management module 118 for managing assets in cloud computing environment 100, according to one or more embodiments described herein. Memory elements may include any suitable memory device(s) for storing data and machine-readable instructions.

The asset management module 118 may be stored in the form of machine-readable instructions on any of the above-mentioned storage media and may be executed by the processor (s) 702. For example, a computer program may include machine-readable instructions which when executed by the processor(s) 702, may cause the processor (s) 702 to detect an event associated with the one or more assets 110A-N deployed in the technical installation 106, obtain state information associated with the one or more assets 110A-N based on the unique identifier associated with the one or more assets 110A-N, where the state information comprises information associated with a soft operating state and a hard operating state of the one or more assets 110A-N; process the state information associated with the one or more assets 110A-N based on the detected event and manage the one or more assets 110A-N in the technical installation 106 based on the processed state information associated with the one or more assets 110A-N, according to the teachings and herein described embodiments of the present subject matter. In one embodiment, the program may be included on a compact disk-read only memory (CD-ROM) and loaded from the CD-ROM to a hard drive in the non-volatile memory.

The storage unit 706 includes a cloud database 120 configured for storing information associated with the one or more assets 110A-N, unique IDs associated with the tenant device(s) 128A-N, and the information associated with artifact, such as artifacts and application hosted on the cloud platform 116. Further, the cloud database 120 is further configured for storing information associated with each user profile registered in the cloud platform 116. The user profile may include, such as but not limited to, profile identifier, tenant ID, artifacts subscribed, roles and permissions, and so on. The communication interface 710 is configured for establishing communication sessions between the tenant device(s) 128A-N and the cloud computing system 102. Also, the communication interface 710 is configured for establishing secure communication sessions between the assets 110A-N, group of assets 108A-N, the tenant device(s) 128A-N and the cloud computing system 102. The display unit 712 is configured for displaying the asset state information associated with the asset groups 108A-N and the one or more assets 110A-N via a graphical user interface. The bus 714 acts as interconnect between various components of the cloud computing system 700. The component such as the input-output device 708 is well known to the person skilled in the art and hence the explanation is thereof omitted.

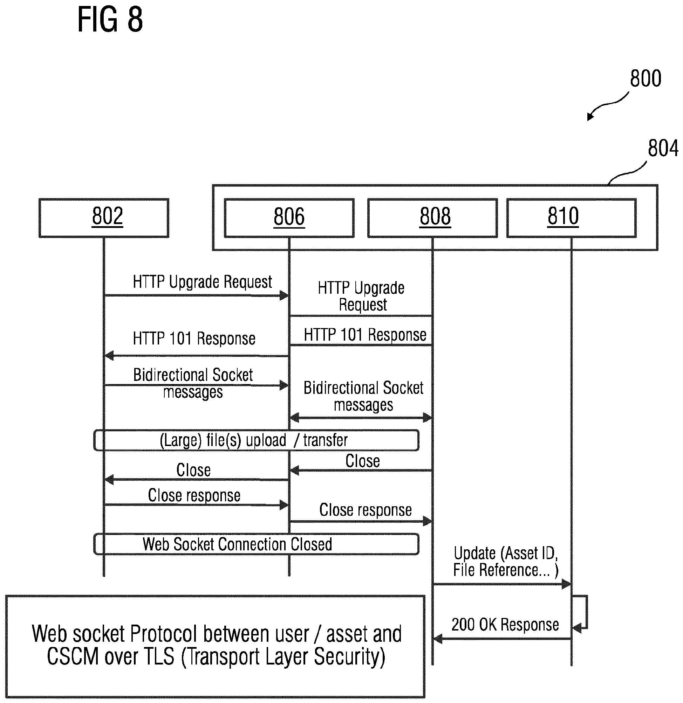

FIG 8 is a flow diagram illustrating an exemplary method 800 of managing assets 110A-N in the cloud computing environment 100, according to an embodiment of the present invention. In FIG. 8, an upgrade request is sent from an asset 802 to a cloud computing system 804. The upgrade request indicates a change in the state of the asset 804. The asset 802 may be similar to the one or more assets 110A-N described above and the cloud computing system 804 may be similar to the cloud computing system 102 described above. Upon receiving the upgrade request, the event handler module 806 analyzes the request, and forwards the request to the asset data processing module 808. The asset data processing module 808 acknowledge the request and send a response to the asset 802 via the event handler module 806. Later, bidirectional WebSocket messages are exchanged between the asset 802 and the asset data processing module 808 via the event handler module 806. Next, the files related to the asset 802 are transferred to the asset data processing module 808 via the event handler module 806. The files may include asset information associated with the asset 802. Upon transferring the files, the WebSocket connection is terminated between the cloud computing system 804 and the asset 802. As a next step, the asset data processing module 808 processes the asset information received in the transferred file from the asset 802 by updating the cloud database 810 (such as database 120) with the received asset information. For example, updating the current state of the state and the like. Then, the cloud database 810 confirms the updating of the state information of the asset 802 via a success message.

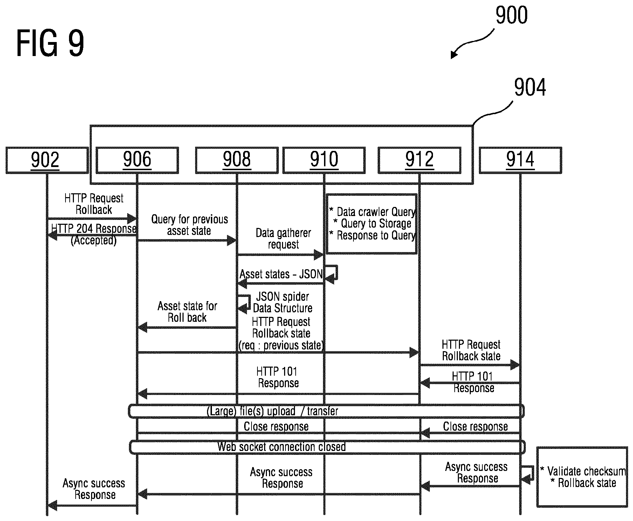

FIG. 9 is a flow diagram illustrating an exemplary method 900 of managing assets 110A-N in the cloud computing environment 100, according to another embodiment of the present invention. A request to rollback a state of an asset is sent from a user of a tenant device 902 to the cloud computing system 904, specifically to an asset state rollback module 906. The asset state rollback module 906 acknowledges the receipt of this request and consequently transmit a query for previous state of this asset to the asset state management module 908. The asset state management module 908 then sends a data gatherer request to the cloud database 910 for obtaining previous state of the asset 902. The cloud database 910 looks-up for the previous state of the asset and outputs all previous states of the asset to the asset state management module 908 via JSON spider list data structure. This retrieved previous state for rollback is transmitted to the asset state rollback module 906 by the asset state management module 908. Later, the asset state rollback module 906 requests the asset control module 912 to manage the asset by rolling back the current state of the asset to the received previous state. The asset control module 912 then rollbacks the current state of the asset to the previous state by deploying the previous state onto the physical asset 914. The asset state is now rolled back, and an acknowledgement message is received from the physical asset 914 to the asset control module 912. Further, the WebSocket connection established between the asset state rollback module 906 and the physical asset 914 is terminated. Furthermore, the asset 914 sends a success response indicating the successful rollback of the state to the user of the tenant device 902 via the cloud computing system 904.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Further Embodiments:

1. A method for managing assets(110A-N) in a cloud computing environment (100), comprising:
   detecting, by a processor (702), an event associated with the one or more assets (110A-N) deployed in a technical installation (106);
   obtaining, by the processor (702), state information associated with the one or more assets (110A-N) based on the unique identifier associated with the one or more assets (110A-N), wherein the state information comprises information associated with a soft operating state and a hard operating state of the one or more assets (110A-N);
   processing, by the processor (702), the state information associated with the one or more assets (110A-N) based on the detected event; and
   managing, by the processor (702), the one or more assets (110A-N) in the technical installation (106) based on the processed state information associated with the one or more assets (110A-N).
2. The method according to embodiment 1, wherein detecting the event associated with the one or more assets (110A-N) deployed in the technical installation (106) comprises:
   receiving real-time information associated with the one or more assets (110A-N) from the technical installation (106); and
   detecting the event associated with the one or more assets (110A-N) based on the received real-time information associated with the one or more assets (110A-N).
3. The method according to embodiments 1 or 2, further comprising:
   establishing a secure connection with the one or more assets (110A-N) in the technical installation (106) via a communication network (104);
   receiving the state information associated with the one or more assets (110A-N) in the technical installation (106); and
   storing the state information associated with the one or more assets (110A-N) in the technical installation (106) in a specific format in a cloud database (120).
4. The method according to embodiments 1,2, or 3 further comprising:
   identifying one or more assets (110A-N) deployed in the technical installation (106) based on a real-time information associated with the one or more assets (110AN), wherein the real-time information associated with the one or more assets (110A-N) comprises list of assets (110AN) deployed in the technical installation (106) and corresponding assets specification;
   generating one or more asset groups (108A-N) comprising identified one or more assets (110A-N) deployed in the technical installation (106), wherein the one or more assets (110A-N) are grouped based on a task assigned to the one or more assets (110A-N); and
   storing the generated one or more asset groups (108AN) in the database (120).
5. The method according to embodiments 1 to 4, wherein obtaining state information associated with the one or more assets (110A-N) in the technical installation (106) based on the unique identifier associated with the one or more assets (110A-N) comprises:
   identifying a unique identifier associated with the one or more assets (110A-N); and
   retrieving the state information associated with the one or more assets (110A-N) from the database (120) based on the identified unique identifier.
6. The method according to embodiments 1 to 5, wherein processing the state information associated with the one or more assets (110A-N) based on the detected event comprises:
   analyzing the received state information associated with the one or more assets (110A-N) in the technical installation (106);
   determining an asset group (108A-N) to which the one or more assets (110A-N) belongs based on the pre-stored asset groups;
   generating state information associated with the determined asset group (108A-N) based on the analyzed state information associated with the one or more assets (110A-N) and based on one or more performance parameters; and
   storing the state information associated with the asset groups (108A-N) in the database (120).
7. The method according to embodiments 1 to 6, wherein processing the state information associated with the one or more assets (110A-N) based on the detected event comprises:
   determining one or more modifications made in the state information based on a pre-stored state information;
   updating the state information associated with the one or more assets (110A-N) in real-time based on the determined one or more modifications; and
   storing the updated state information associated with the one or more assets (110A-N) in the database (120).
8. The method according to embodiments 1 to 7, wherein processing the state information associated with the one or more assets (110A-N) based on the detected event comprises:
   determining performance of the one or more assets(110A-N) in real-time based on the current state information of the one or more assets (110A-N);
   determining performance of the asset group (108A-N) in real-time based on the determined performance of the one or more assets (110A-N) and the current state information of the asset groups (108A-N); and
   modifying the current state information of the one or more assets (110A-N) if the performance of the asset groups (108A-N) and the one or more assets (110A-N) belonging to the asset groups (108A-N) is abnormal.
9. The method according to embodiments 1 to 8, wherein managing the one or more assets (110A-N) in the technical installation (106) based on the processed state information associated with the one or more assets (110A-N) comprises:
   deploying the modified state information into the one or more assets (110A-N) in the technical installation (106) .
10. The method according to embodiments 1 to 9, wherein managing the one or more assets (110A-N) in the technical installation (106) based on the processed state information associated with the one or more assets(110A-N) comprises:
   generating a virtual asset model for the one or more assets (110A-N) in the technical installation (106) based on the processed state information associated with the one or more assets (110A-N), wherein the virtual asset model comprises virtual assets emulating the behavior of real-time one or more assets (110A-N) in the technical installation (106);
   performing one or more actions on the virtual asset model based on the processed state information;
   analyzing the behavior of the virtual assets upon performing the one or more actions; and
   deploying the processed state information into the real-time one or more assets (110A-N) based on the analysis.
11. A cloud computing system (102, 700) for asset management in a cloud computing environment (100), wherein the cloud computing system (102, 700) comprises:
   one or more processor(s) (702); and
   a memory (704) coupled to the one or more processor (s) (702), wherein the memory (704) comprises an asset management module (118) stored in the form of machine-readable instructions executable by the one or more processor(s) (702), wherein the asset management module (118) is capable of performing a method according to any of the embodiments 1-10.
12. A cloud computing environment (100) comprising:
   a system (102, 700) claimed in embodiment 11;
   a plurality of tenant devices (128A-N) communicatively coupled to the system (102) and a technical installation (106) via a network (102); and
   the technical installation (106) comprising one or more asset groups (108A-N), wherein the one or more asset groups (108AN) comprises one or more assets (110A-N) communicatively coupled to the system (102); and the tenant devices (128A-N).
13. A computer-program product, having machine-readable instructions stored therein, that when executed by a processor(s) (702), cause the processor(s) (702) to perform method steps according to any of the embodiments 1-10.

### Reference sign list

100-cloud computing environment
102-cloud computing system
104-network
106-technical installation
108A-N-asset groups
110A-N-one or more assets
112- a cloud interface
114-cloud hardware and OS
116-cloud platform
118-an asset management module
120-cloud database
122-event handler
124-asset data processing module
126-asset control module
128A-N-user devices
202- an industrial plant data handling module
204-an asset data mapper
206-an asset group management module
208-asset state processing module
210-an asset state rollback module.
302- virtual asset model generation module
304-an asset state deployer module
306-an asset visualization module
700- cloud computing system
702-processor(s)
704-a memory
706-storage unit
708-an input-output unit
710-a communication interface
712-a display unit
714-a bus.
802-asset
804-cloud computing system
806-event handler module
808-asset data processing module
810-cloud database
902-tenant device
904-cloud computing system
906- asset state rollback module
908- asset state management module
910- cloud database
912- asset control module
914- physical asset

## Claims

1. A method for managing assets(110A-N) in a cloud computing environment (100), comprising:
detecting, by a processor (702), an event associated with the one or more assets (110A-N) deployed in a technical installation (106);
obtaining, by the processor (702), state information associated with the one or more assets (110A-N) based on the unique identifier associated with the one or more assets (110A-N), wherein the state information comprises information associated with a soft operating state and a hard operating state of the one or more assets (110A-N);
processing, by the processor (702), the state information associated with the one or more assets (110A-N) based on the detected event; and
managing, by the processor (702), the one or more assets (110A-N) in the technical installation (106) based on the processed state information associated with the one or more assets (110A-N).

2. The method according to claim 1, wherein detecting the event associated with the one or more assets (110A-N) deployed in the technical installation (106) comprises:
receiving real-time information associated with the one or more assets (110A-N) from the technical installation (106); and
detecting the event associated with the one or more assets (110A-N) based on the received real-time information associated with the one or more assets (110A-N).

3. The method according to claims 1 or 2, further comprising:
establishing a secure connection with the one or more assets (110A-N) in the technical installation (106) via a communication network (104);
receiving the state information associated with the one or more assets (110A-N) in the technical installation (106); and
storing the state information associated with the one or more assets (110A-N) in the technical installation (106) in a specific format in a cloud database (120).

4. The method according to claims 1,2, or 3 further comprising:
identifying one or more assets (110A-N) deployed in the technical installation (106) based on a real-time information associated with the one or more assets (110AN), wherein the real-time information associated with the one or more assets (110A-N) comprises list of assets (110AN) deployed in the technical installation (106) and corresponding assets specification;
generating one or more asset groups (108A-N) comprising identified one or more assets (110A-N) deployed in the technical installation (106), wherein the one or more assets (110A-N) are grouped based on a task assigned to the one or more assets (110A-N); and
storing the generated one or more asset groups (108AN) in the database (120).

5. The method according to claims 1 to 4, wherein obtaining state information associated with the one or more assets (110A-N) in the technical installation (106) based on the unique identifier associated with the one or more assets (110A-N) comprises:
identifying a unique identifier associated with the one or more assets (110A-N); and
retrieving the state information associated with the one or more assets (110A-N) from the database (120) based on the identified unique identifier.

6. The method according to claims 1 to 5, wherein processing the state information associated with the one or more assets (110A-N) based on the detected event comprises:
analyzing the received state information associated with the one or more assets (110A-N) in the technical installation (106);
determining an asset group (108A-N) to which the one or more assets (110A-N) belongs based on the pre-stored asset groups;
generating state information associated with the determined asset group (108A-N) based on the analyzed state information associated with the one or more assets (110A-N) and based on one or more performance parameters; and
storing the state information associated with the asset groups (108A-N) in the database (120).

7. The method according to claims 1 to 6, wherein processing the state information associated with the one or more assets (110A-N) based on the detected event comprises:
determining one or more modifications made in the state information based on a pre-stored state information;
updating the state information associated with the one or more assets (110A-N) in real-time based on the determined one or more modifications; and
storing the updated state information associated with the one or more assets (110A-N) in the database (120).

8. The method according to claims 1 to 7, wherein processing the state information associated with the one or more assets (110A-N) based on the detected event comprises:
determining performance of the one or more assets(110A-N) in real-time based on the current state information of the one or more assets (110A-N);
determining performance of the asset group (108A-N) in real-time based on the determined performance of the one or more assets (110A-N) and the current state information of the asset groups (108A-N); and
modifying the current state information of the one or more assets (110A-N) if the performance of the asset groups (108A-N) and the one or more assets (110A-N) belonging to the asset groups (108A-N) is abnormal.

9. The method according to claims 1 to 8, wherein managing the one or more assets (110A-N) in the technical installation (106) based on the processed state information associated with the one or more assets (110A-N) comprises:
deploying the modified state information into the one or more assets (110A-N) in the technical installation (106) .

10. The method according to claims 1 to 9, wherein managing the one or more assets (110A-N) in the technical installation (106) based on the processed state information associated with the one or more assets(110A-N) comprises:
generating a virtual asset model for the one or more assets (110A-N) in the technical installation (106) based on the processed state information associated with the one or more assets (110A-N), wherein the virtual asset model comprises virtual assets emulating the behavior of real-time one or more assets (110A-N) in the technical installation (106);
performing one or more actions on the virtual asset model based on the processed state information;
analyzing the behavior of the virtual assets upon performing the one or more actions; and
deploying the processed state information into the real-time one or more assets (110A-N) based on the analysis.

11. A cloud computing system (102, 700) for asset management in a cloud computing environment (100), wherein the cloud computing system (102, 700) comprises:
one or more processor(s) (702); and
a memory (704) coupled to the one or more processor (s) (702), wherein the memory (704) comprises an asset management module (118) stored in the form of machine-readable instructions executable by the one or more processor(s) (702), wherein the asset management module (118) is capable of performing a method according to any of the claims 1-10.

12. A cloud computing environment (100) comprising:
a system (102, 700) claimed in claim 11;
a plurality of tenant devices (128A-N) communicatively coupled to the system (102) and a technical installation (106) via a network (102); and
the technical installation (106) comprising one or more asset groups (108A-N), wherein the one or more asset groups (108AN) comprises one or more assets (110A-N) communicatively coupled to the system (102); and the tenant devices (128A-N).

13. A computer-program product, having machine-readable instructions stored therein, that when executed by a processor(s) (702), cause the processor(s) (702) to perform method steps according to any of the claims 1-10.
